# DEMANDE DE BREVET EUROPEEN

(11) **EP 2 423 081 A1**
(43) Date de publication de la demande: **29.02.2012**
(21) Numéro de dépôt: 10174558.6
(22) Date de dépôt: 30.08.2010
(51) Int. Cl.: B62D 29/04, B62D 33/04, E04C 2/20, B65D 88/02

(54) **Structure pour former une enceinte de stockage et procédé pour réaliser une telle structure**

(71) Demandeur: Giraudon S.A.S., 43200 Yssingeaux (FR)
(72) Inventeur: Azevedo, Elodie, 43200, YSSINGEAUX (FR); Frossard, Eric, 43200, YSSINGEAUX (FR)
(74) Mandataire: Delorme, Nicolas

(57) **Abrégé**

Cette structure (3) comprend plusieurs panneaux (4.1, 4.2, 5.1, 6.1, 6.2, 7.1, 7.2, 8.1, 8.2) et des moyens d'assemblage solidarisant les panneaux entre eux. Chaque panneau (4.1, 4.2, 5.1, 6.1, 6.2, 7.1, 7.2, 8.1, 8.2) est constitué essentiellement de polypropylène et chaque moyen d'assemblage est constitué de polypropylène mis en forme thermiquement.

## Description

La présente invention concerne une structure pour former une enceinte de stockage. Par ailleurs, la présente invention concerne un procédé pour réaliser une telle structure.

La présente invention trouve notamment application dans le domaine du transport, pour former une enceinte de véhicule utilitaire ou de véhicule industriel. La présente invention trouve aussi application dans le domaine domestique, pour former l'enceinte d'un garage ou d'une cabane de jardin, ou encore dans le domaine du stockage de marchandise pour réaliser des containers.

Une structure de l'art antérieur formant enceinte de stockage est généralement composée de plusieurs panneaux rapportés sur une ossature métallique. Chaque panneau est constitué de plusieurs matériaux différents, par exemple de plastique et de métal.

Cependant, comme une telle structure et un tel panneau de l'art antérieur contiennent plusieurs matériaux différents, il s'avère difficile, voire impossible, de les recycler totalement ou quasi-totalement. En outre, la mise en oeuvre de plusieurs matériaux induit une fabrication relativement longue et onéreuse.

Un objet de la présente invention est de résoudre, en tout ou partie, les problèmes mentionnés ci avant.

A cet effet, l'invention a pour objet une structure, pour former une enceinte de stockage telle qu'une caisse de véhicule utilitaire, la structure comprenant plusieurs panneaux et des moyens d'assemblage solidarisant les panneaux entre eux.

Chaque panneau est constitué essentiellement de polypropylène et chaque moyen d'assemblage est constitué de polypropylène mis en forme thermiquement.

En d'autres termes, une structure conforme à l'invention est composée et assemblée exclusivement au moyen de polypropylène.

Ainsi, une structure conforme à l'invention autorise son recyclage total, au moyen d'opérations simples et rapides, donc économiques. De plus, la fabrication d'une telle structure est relativement aisée.

Selon un mode de réalisation, au moins un panneau est formé par la superposition de deux parois pleines et d'une strate alvéolaire interposée entre les deux parois pleines, la strate alvéolaire ayant de préférence une géométrie en nid d'abeilles.

Ainsi, un tel panneau présente un poids relativement faible pour une résistance mécanique élevée.

Selon un mode de réalisation, le polypropylène constituant essentiellement au moins un panneau contient des fibres de renfort, de préférence des fibres de verre.

Ainsi, un tel polypropylène présente une résistance mécanique élevée.

Selon un autre mode de réalisation, au moins un panneau a une épaisseur comprise entre 15 mm et 100 mm, de préférence entre 18 mm et 60 mm.

Ainsi, un tel panneau peut être adapté à de diverses applications.

Selon un mode de réalisation, au moins un panneau est au moins partiellement recouvert d'au moins un film en polypropylène.

Ainsi, un tel panneau peut être décoré par un film, tout en demeurant totalement recyclable.

Selon un mode de réalisation, au moins un panneau est issu de thermoformage, par exemple de pliage à chaud.

Ainsi, un tel panneau permet de limiter le nombre de moyens d'assemblage nécessaires pour réaliser une structure conforme à l'invention, car il remplace au moins deux panneaux solidarisés entre eux suivant un angle.

Selon un mode de réalisation, des inserts constitués de polypropylène sont montés dans au moins un panneau, chaque insert présentant de préférence un alésage débouchant.

Ainsi, de tels inserts permettent de loger des éléments pour fixer divers composants tels que des longerons.

Selon un mode de réalisation, au moins deux panneaux sont juxtaposés chant contre chant, les moyens d'assemblage correspondants étant réalisés par ramollissement desdits chants.

Ainsi, de tels panneaux sont aisés à solidariser sans apport de matière extérieure.

Selon un mode de réalisation, au moins deux panneaux présentent des bords qui ont des formes complémentaires de façon à se chevaucher, les moyens d'assemblage correspondants étant réalisés par ramollissement desdits bords.

Ainsi, une telle jonction entre deux panneaux présente une résistance mécanique relativement élevée. De plus, le positionnement relatif des panneaux est aisé à réaliser.

Selon un mode de réalisation, des moyens d'assemblage sont formés par des cordons de soudure.

Ainsi, de tels moyens d'assemblage sont aisés à mettre en oeuvre et présentent une résistance mécanique relativement élevée.

Selon un mode de réalisation, les moyens d'assemblage sont des cordons de soudure obtenus par extrusion de fil en polypropylène.

Ainsi, de tels moyens d'assemblage permettent un assemblage aisé, rapide et résistant.

Par ailleurs, la présente invention a pour objet un procédé pour réaliser une structure formant enceinte de stockage telle qu'une caisse de véhicule utilitaire.

Ce procédé comprend les étapes :
- réaliser plusieurs panneaux, chaque panneau étant constitué essentiellement de polypropylène ; et
- solidariser les panneaux entre eux par des moyens d'assemblage, chaque moyen d'assemblage étant constitué de polypropylène mis en forme thermiquement.

Ainsi, un tel procédé permet de réaliser une structure conforme à l'invention.

La présente invention sera bien comprise et ses avantages ressortiront aussi à la lumière de la description qui va suivre, donnée à titre d'exemple non limitatif, et faite en référence aux dessins annexés, dans lesquels :
- la figure 1 est une vue de côté d'un véhicule utilitaire comportant une structure conforme à l'invention ;
- la figure 2 est une vue en perspective de la structure de la figure 1 à l'état assemblé ;
- la figure 3 est une vue en perspective éclatée, suivant l'angle de la figure 2, de la structure de la figure 2, à l'état partiellement désassemblé ;
- la figure 4 est une section partielle de deux panneaux d'une structure conforme à l'invention avant leur solidarisation ;
- la figure 5 est une vue schématique d'une partie de la structure de la figure 2 comportant deux panneaux avant leur solidarisation ;
- la figure 6 est une vue similaire à la figure 5 des deux panneaux de la figure 5 après leur solidarisation ;
- la figure 7 est une vue d'une partie de la structure de la figure 2 comportant un panneau avant son thermoformage ; et
- la figure 8 est une vue similaire à la figure 7 du panneau de la figure 7 après son thermoformage.

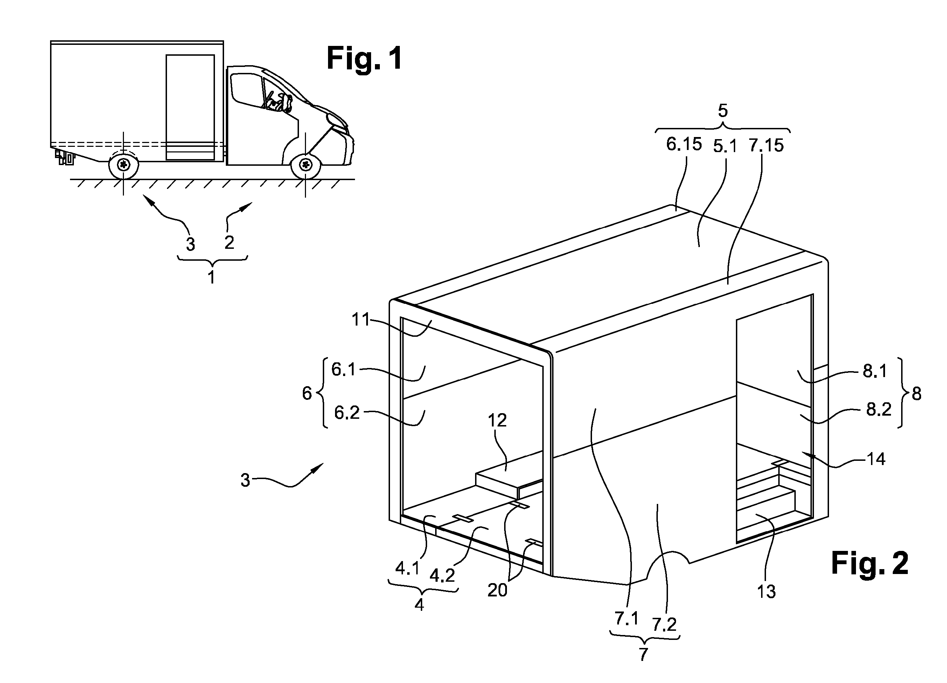

La figure 1 illustre un véhicule utilitaire 1 qui comprend une cabine de conduite 2 et une caisse 3. La caisse 3 est une structure qui forme une enceinte de stockage. Comme le montre la figure 2, la caisse 3 a une forme globalement parallélépipédique à section transversale rectangulaire. La caisse 3 comprend un plancher 4, un plafond 5, des parois latérales 6 et 7 et une paroi antérieure 8. Les parois latérales 6 et 7 s'étendent verticalement entre le plancher 4 et le plafond 5.

Le plancher 4 est principalement formé par deux panneaux 4.1 et 4.2. Les parois latérales 6 et 7 sont respectivement formées par des panneaux 6.1 et 6.2 et par les panneaux 7.1 et 7.2. Le plafond 5 est principalement formé par un panneau 5.1 et par deux ailes 6.15 et 7.15 qui appartiennent respectivement aux panneaux 6.1 et 7.1. La paroi antérieure 8 est principalement formée par deux panneaux 8.1 et 8.2.

Chaque panneau 4.1, 4.2, 5.1, 6.1, 6.2, 7.1, 7.2, 8.1 ou 8.2 est constitué essentiellement de polypropylène. Le polypropylène constituant les panneaux de la caisse 3 peut contenir des fibres de renfort, telles que des fibres de verre.

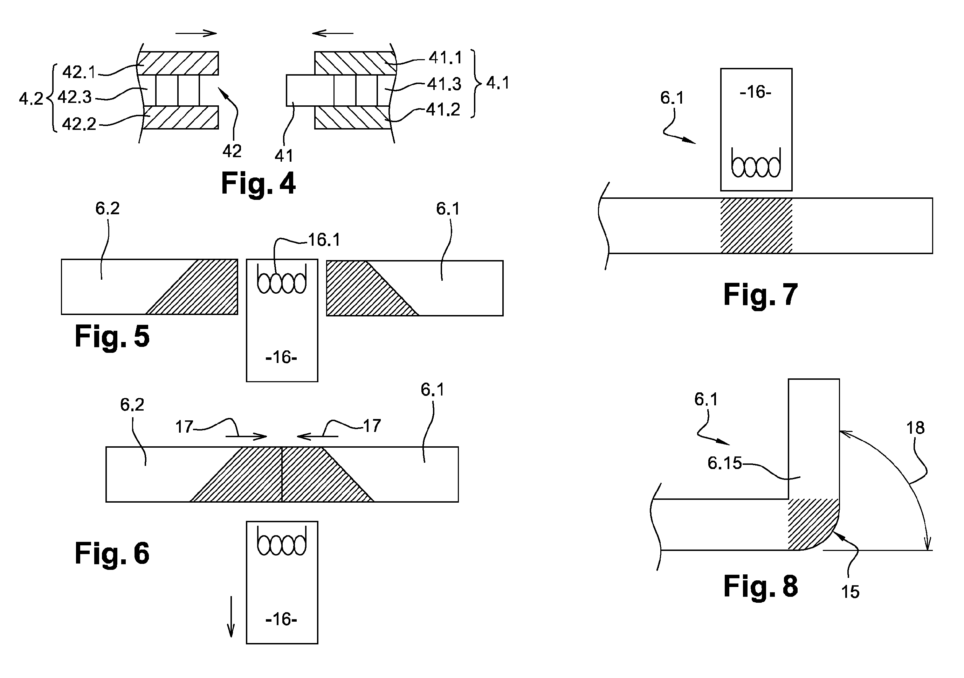

La figure 2 montre la caisse 3 à l'état assemblé, dans lequel les panneaux 4.1, 4.2, 5.1, 6.1, 6.2, 7.1, 7.2, 8.1 et 8.2 sont solidarisés entre eux par des moyens d'assemblage non représentés mais décrits ci-après, en particulier en relation avec les figures 4 et 5.

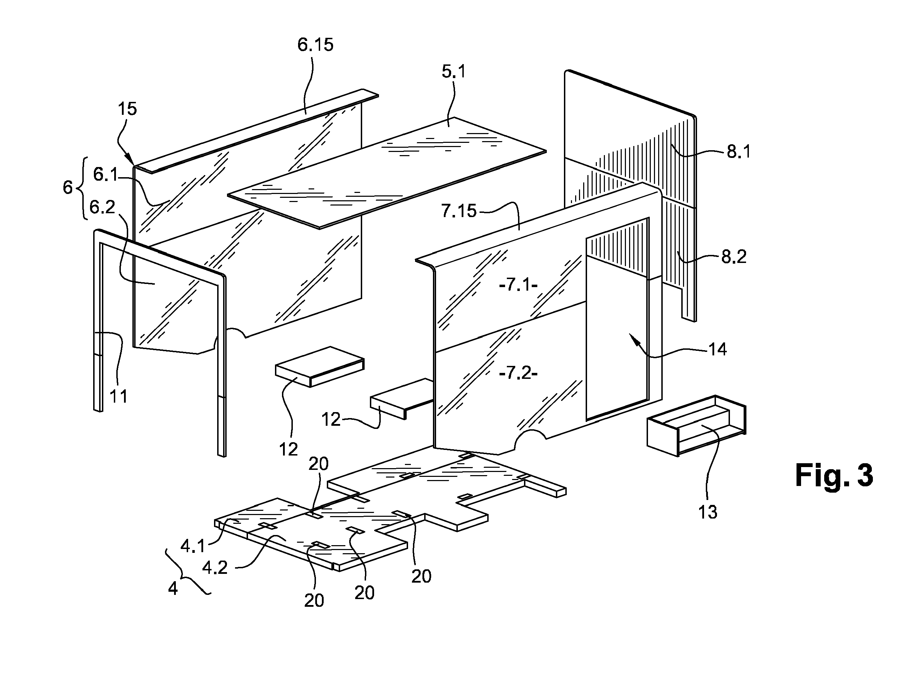

La figure 3 montre la caisse 3 à l'état partiellement désassemblé, c'est-à-dire avant que les moyens d'assemblage ne solidarisent les panneaux entre eux, à l'exception des parois 6 et 7 qui sont illustrées dans leur état assemblé.

La caisse 3 comprend en outre un cadre 11, des passages de roues 12 et une marche 13. Le cadre 11 a pour fonction de supporter un hayon non représenté. La marche 13 a pour fonction de faciliter l'accès d'une personne à l'intérieur de la caisse 3 par une ouverture 14 qui est ménagée dans la paroi latérale 7. Les passages de roues 12 forment des saillies au dessus du niveau du plancher 4 et au niveau des roues du véhicule utilitaire 1. Comme le montre la figure 3, le plancher 4 présente des ouvertures pour monter les passages de roues 12 et la marche 13.

Le cadre 11, les passages de roues 12 et la marche 13 sont formés par l'assemblage de composants constitués de polypropylène, ce qui permet leur recyclage intégral avec la caisse 3.

Les panneaux 5.1, 6.1, 6.2, 7.1, 7.2, 8.1 et 8.2 ont chacun une épaisseur d'environ 25 mm. Le plancher 4 a une épaisseur d'environ 60 mm.

Comme le montre la figure 4, chaque panneau 4.1 ou 4.2 est formé par la superposition, suivant une direction verticale, de deux parois pleines 41.1 et 41.2 ou 42.1 et 42.2 entre lesquelles est interposée une strate alvéolaire 41.3 ou 42.3. La strate alvéolaire 41.3 ou 42.3 a ici une géométrie en nid d'abeilles. Le plancher 4 présente ainsi une résistance mécanique qui lui permet de supporter le poids du chargement, lequel varie suivant le poids total en charge et peut être considéré comme uniformément réparti sur la surface du plancher 4.

Chacun des panneaux 6.1, 6.2, 7.1 et 7.2 peut être au moins partiellement recouvert d'un ou plusieurs films en polypropylène, de façon à décorer ses faces externes et éventuellement ses faces internes.

Pour solidariser entre eux les panneaux 4.1, 4.2, 5.1, 6.1, 6.2, 7.1, 7.2, 8.1 et 8.2, chaque moyen d'assemblage, non représenté, est constitué de polypropylène qui est mis en forme thermiquement. Chaque moyen d'assemblage permet de solidariser entre eux deux des panneaux de la caisse 3.

Dans la présente demande, l'expression « mis en forme thermiquement » indique que le polypropylène est chauffé jusqu'à sa température de ramollissement, voir sa température de fusion, puis refroidi. La solidarisation de deux panneaux de la caisse 3 est réalisée lorsque le moyen d'assemblage a atteint sa température de ramollissement. La température de fusion du polypropylène est d'environ 170°C et sa température de ramollissement est d'environ 140°C.

Les figures 5 et 6 illustrent deux étapes d'une méthode pour solidariser les panneaux 6.1 et 6.2 entre eux. Cette méthode met en oeuvre un outil 16 qui comprend des moyens de chauffage 16.1 tels qu'une résistance électrique.

Comme le montre la figure 5, l'outil 16 est disposé près ou au contact des chants des panneaux 6.1 et 6.2. Les moyens de chauffage 16.1 chauffent localement les chants des panneaux 6.1 et 6.2. Le polypropylène constituant les chants des panneaux 6.1 et 6.2 est ainsi chauffé jusqu'à sa température de ramollissement.

Puis, comme le montre la figure 6, l'outil 16 est éloigné et les panneaux 6.1 et 6.2 sont pressés l'un contre l'autre au niveau de leurs chants respectifs suivant les flèches 17. Le polypropylène constituant les chants des panneaux 6.1 et 6.2 refroidit, ce qui réalise un premier moyen d'assemblage par cohésion qui solidarise les panneaux 6.1 et 6.2.

Comme le montre la figure 4, les panneaux 4.1 et 4.2 sont solidarisés de façon similaire aux panneaux 6.1 et 6.2, comme décrit ci-avant. De plus, les panneaux 4.1 et 4.2 présentent des bords respectifs 41 et 42 qui ont des formes complémentaires de façon à se chevaucher lorsque la caisse 3 est à l'état assemblé. Ainsi, le bord 41 présente un ergot qui se loge dans une cavité que présente le bord 42. Un outil chauffant est disposé près ou au contact des bords 41 et 42 avant de presser les panneaux 4.1 et 4.2 l'un contre l'autre.

Un deuxième moyen d'assemblage est formé par des cordons de soudure obtenus par extrusion de fil en polypropylène. Par exemple, les panneaux formant les passages de roues 12 ou la marche 13 peuvent être solidarisés par de tels cordons de soudure.

Comme le montrent les figures 7 et 8, le panneau 6.1 est issu de thermoformage. Plus particulièrement, le panneau 6.1 est issu de pliage à chaud.

Comme le montre la figure 7, l'outil 16 est approché d'une région médiane des panneaux 6.1 pour le chauffer localement. Puis, comme le montre la figure 8, l'aile 6.15 est pliée suivant la flèche 18 à 90° par rapport au reste du panneau 6.1. L'aile 6.15 est séparée du reste du panneau 6.1 par un pli 15. L'aile 7.15 est aussi formée par pliage à chaud. Les ailes 6.15 et 7.15 forment les bords du plafond 5 où elles sont solidarisées au panneau 5.1, par exemple par des cordons de soudure.

Par ailleurs, le plancher 4 reçoit des inserts 20 qui sont constitués de polypropylène. Les inserts 20 présentent chacun un alésage débouchant pour loger, par exemple, une tige filetée servant à fixer des composants non représentés sur la caisse 3.

Un procédé conforme à l'invention pour réaliser la caisse 3 comprend les étapes :
- réaliser les panneaux 4.1, 4.2, 5.1, 6.1, 6.2, 7.1, 7.2, 8.1 et 8.2 en polypropylène,
- solidariser les panneaux entre eux par des moyens d'assemblage constitués de polypropylène et mis en forme thermiquement.

Selon d'autres modes de réalisation de l'invention non représentés, pris séparément ou selon toute combinaison techniquement admissible :
- les moyens d'assemblage peuvent être réalisés par soudage à ultrasons.

## Revendications

1. Structure (3), pour former une enceinte de stockage telle qu'une caisse de véhicule utilitaire (1), la structure (3) comprenant plusieurs panneaux (4.1, 4.2, 5.1 , 6.1 , 6.2, 7.1 , 7.2, 8.1 , 8.2) et des moyens d'assemblage solidarisant les panneaux (4.1, 4.2, 5.1, 6.1, 6.2, 7.1, 7.2, 8.1, 8.2) entre eux, la structure (3) étant **caractérisée en ce que** chaque panneau (4.1, 4.2, 5.1, 6.1, 6.2, 7.1, 7.2, 8.1, 8.2) est constitué essentiellement de polypropylène et **en ce que** chaque moyen d'assemblage est constitué de polypropylène mis en forme thermiquement.

2. Structure (3) selon la revendication 1, dans laquelle au moins un panneau (4.1, 4.2) est formé par la superposition de deux parois pleines (41.1, 41.2, 42.1, 42.2) et d'une strate alvéolaire (41.3, 42.3) interposée entre les deux parois pleines (41.1, 41.2, 42.1, 42.2), la strate alvéolaire (41.3, 42.3) ayant de préférence une géométrie en nid d'abeilles.

3. Structure (3) selon l'une des revendications précédentes, dans laquelle le polypropylène constituant essentiellement au moins un panneau (6.1, 6.2, 7.1, 7.2, 8.1, 8.2) contient des fibres de renfort, de préférence des fibres de verre.

4. Structure (3) selon l'une des revendications précédentes, dans laquelle au moins un panneau a une épaisseur comprise entre 15 mm et 100 mm, de préférence entre 18 mm et 60 mm.

5. Structure (3) selon l'une des revendications précédentes, dans laquelle au moins un panneau (6.1, 6.2, 7.1, 7.2) est au moins partiellement recouvert d'au moins un film en polypropylène.

6. Structure (3) selon l'une des revendications précédentes, dans laquelle au moins un panneau (6.1, 7.1) est issu de thermoformage, par exemple de pliage à chaud.

7. Structure (3) selon l'une des revendications précédentes, dans laquelle des inserts (20) constitués de polypropylène sont montés dans au moins un panneau (4.1, 4.2), chaque insert (20) présentant de préférence un alésage débouchant.

8. Structure (3) selon l'une des revendications précédentes, dans laquelle au moins deux panneaux (6.1, 6.2) sont juxtaposés chant contre chant, les moyens d'assemblage correspondants étant réalisés par ramollissement desdits chants.

9. Structure (3) selon l'une des revendications précédentes, dans laquelle au moins deux panneaux (4.1, 4.2) présentent des bords (41, 42) qui ont des formes complémentaires de façon à se chevaucher, les moyens d'assemblage correspondants étant réalisés par ramollissement desdits bords.

10. Structure (3) selon l'une des revendications précédentes, dans laquelle les moyens d'assemblage sont des cordons de soudure obtenus par extrusion de fil en polypropylène.

11. Procédé pour réaliser une structure (3) formant enceinte de stockage telle qu'une caisse de véhicule utilitaire (1), le procédé étant **caractérisé en ce qu'**il comprend les étapes :
- réaliser plusieurs panneaux (4.1, 4.2, 5.1, 6.1, 6.2, 7.1, 7.2, 8.1, 8.2), chaque panneau étant constitué essentiellement de polypropylène ; et
- solidariser les panneaux (4.1, 4.2, 5.1, 6.1, 6.2, 7.1, 7.2, 8.1, 8.2) entre eux par des moyens d'assemblage, chaque moyen d'assemblage étant constitué de polypropylène mis en forme thermiquement.
